# EUROPEAN PATENT SPECIFICATION

(11) **EP 2 425 622 B1**
(45) Date of publication and mention of the grant of the patent: **05.10.2016**
(21) Application number: 09779390.5
(22) Date of filing: 30.04.2009
(51) Int. Cl.: H04N 19/61, H04N 19/43, H04N 19/433, H04N 19/436, H04N 19/533

(54) **EFFICIENT INTERNAL CACHE FOR HARDWARE MOTION ESTIMATION**
EFFIZIENTER INTERNER SPEICHER FÜR VORRICHTUNG ZUR BEWEGUNGSSCHÄTZUNG
MÉMOIRE CACHE INTERNE EFFICACE POUR ESTIMATION DE MOUVEMENT MATÉRIELLE

(43) Date of publication of application: 07.03.2012
(73) Proprietor: Telefonaktiebolaget LM Ericsson (publ), 164 83 Stockholm (SE)
(72) Inventor: DENCHER, Anthony, Southampton Hampshire SO31 4RQ (GB)
(74) Representative: Ericsson
(86) International application number: PCT/EP2009/055277
(87) International publication number: WO 2010/124736

(56) References cited:
- EP-A1- 1 622 391
- EP-A1- 2 392 139
- WO-A1-01/09717
- YU-WEN HUANG ET AL: "A 1.3TOPS H.264/AVC single-chip encoder for HDTV applications" IEEE INTERNATIONAL SOLID-STATE CIRCUITS CONFERENCE, ISSCC 2005. DIGEST OF TECHNICAL PAPERS., 6 February 2005 (2005-02-06), pages 128-129, 588, XP031173679 PISCATAWAY, NJ, USA ISBN: 978-0-7803-8904-5
- ZHENYU LIU ET AL: "HDTV1080p H.264/AVC Encoder Chip Design and Performance Analysis" IEEE JOURNAL OF SOLID-STATE CIRCUITS, IEEE SERVICE CENTER, PISCATAWAY, NJ, US, vol. 44, no. 2, 1 February 2009 (2009-02-01), pages 594-608, XP011243181 ISSN: 0018-9200
- WEI-YIN CHEN ET AL: "Algorithm and architecture design of cache system for motion estimation in high definition H.264/AVC" ACOUSTICS, SPEECH AND SIGNAL PROCESSING, 2008. ICASSP 2008. IEEE INTERNATIONAL CONFERENCE ON, IEEE, PISCATAWAY, NJ, USA, 31 March 2008 (2008-03-31), pages 2193-2196, XP031251021 ISBN: 978-1-4244-1483-3
- NICOLAS BEUCHER ET AL: "High Acceleration for Video Processing Applications Using Specialized Instruction Set Based on Parallelism and Data Reuse" JOURNAL OF SIGNAL PROCESSING SYSTEMS ; FOR SIGNAL, IMAGE, AND VIDEO TECHNOLOGY (FORMERLY THE JOURNAL OF VLSI SIGNAL PROCESSING SYSTEMS FOR SIGNAL, IMAGE, AND VIDEO TECHNOLOGY), SPRINGER US, BOSTON, vol. 56, no. 2-3, 28 May 2008 (2008-05-28) , pages 155-165, XP019690508 ISSN: 1939-8115

## Description

### Technical Field

The invention is related to digital video compression in general, and in particular to an improved internal cache for use in storing Motion Estimation reference data during digital video compression methods.

### Background

During the Motion Estimation stage, analysis of a sequence of pictures from a video stream is carried out in order to measure the ways in which elements of each picture move from picture to picture, and to express these movements in the form of Motion Vectors (MV).

Video compression methods are used within digital television broadcasting systems to reduce the data rate per channel while maintaining picture quality. It is a primary objective of these methods that the instantaneous demand for transmission capacity of the moving television picture sequence is substantially met at all times despite its varying complexity. Typical transmission channels used to convey audio-visual material have fixed bit rates and so the varying demand for capacity of the picture sequence may not always be satisfied.

It is an inevitable result of the process that for extremes of highly complex picture behaviour the picture quality may occasionally be compromised in order that the bit rate criteria are met. By choosing a bit rate that is too low, poor quality will result for a significant proportion of the time. Conversely, a bit rate that is too high will meet quality needs, but will waste transmission capacity for a significant proportion of the time. Thus, some kind of control mechanism is required that evens out the peaks and troughs of demand so that a given fixed bit rate is adequate to deliver good picture quality at all times.

Part of such control should ideally take some objective measure of the picture quality into account, so that the distortion in the picture is known to some degree. The optimisation of this whole process is called Rate Distortion Optimisation (RDO) and it is an inherent part of practical realisations of modern compression methods. RDO aims to balance between the bits spent on a picture and the distortion in the picture to give the most efficient video encoding.

The complex methods currently employed have become very sophisticated and use a variety of techniques in concert to achieve the objective of coding complex picture sequences using minimum bit rate. Typically, in such methods the compressed picture sequence of the television signal is hierarchically structured at a number of levels, each enabling the full set of coding tools available to be applied efficiently.

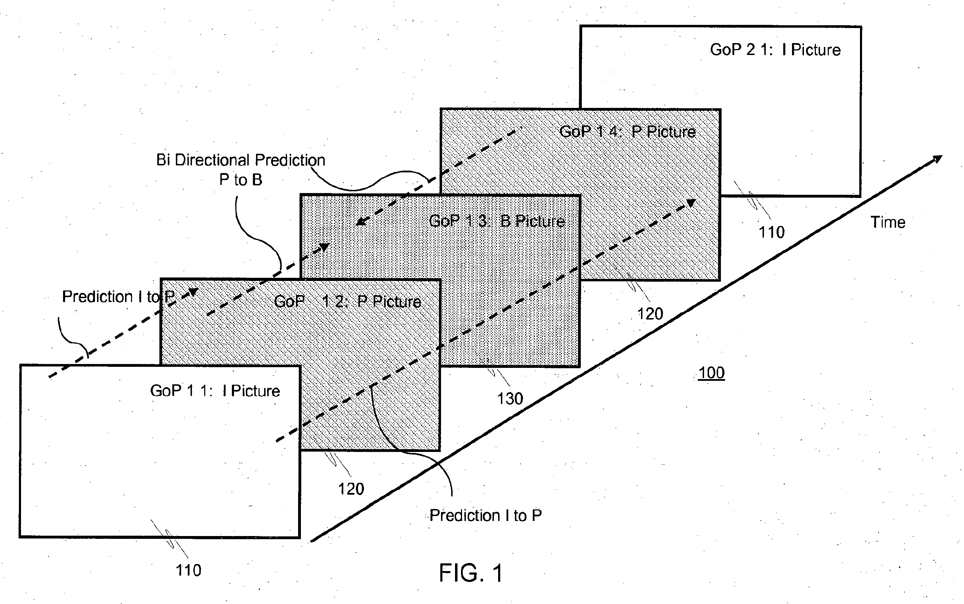

At the highest of these levels, the picture sequence is organised into contiguous Groups of Pictures (GOP) 100 (see Fig. 1) and each group is further organised so that the first picture of each GOP is coded without reference to any other picture in the sequence. This is known as Intra-picture coding and the resultant picture is called an I picture 110. Subsequent pictures in the GOP are coded differentially with respect to other pictures in the GOP, including the initial I picture 110. For example, the second picture in the GOP is typically predicted directly from the I picture 110 and the differences between them, being small, are then coded. The resultant picture is known as a Predicted or P picture 120, Typically the number of bits required to code this P picture 120 is smaller than that needed for an I picture 110. The next picture of the GOP may also be predicted in turn from this P picture 120 and this pattern may repeat for the remainder of the GOP. These P predictions are uni-directional and use past pictures to predict future ones in a sequence of mutual dependence.

It is also possible to code pictures in the GOP using Bi-directional prediction, that is, potentially using both past and future pictures and so this is known as a B picture 130. A B picture 130 typically needs fewer bits than a P picture 120.

Thus, a typical simple GOP may utilise more B 130 and P 120 pictures relative to the number of I pictures 110. For example, they may have a structure such as that illustrated by Fig. 1 that is a short example of the form IPBP, which repeats for each successive GOP. A more typical structure might have many more B and P pictures, such as IPPBPPB or IBBPBBP etc. The absolute GOP structure 100 and GOP length are arbitrary and may be set by the system designer to suit the needs of a given application. It should be noted in Fig. 1 that the B picture 130 can not be coded until the following P picture 120 has itself been coded. Furthermore this B picture 130 cannot be decoded until the following P picture 120 has been received and decoded. It is therefore common practice that the natural order of the pictures is changed in transmission in order to send the independent reference P pictures 120 before the dependent B pictures 130. The natural order is restored at the decoder prior to display.

In video systems deployed in broadcasting (and most other professional applications), a two dimensional image of a scene is usually scanned in a raster fashion from top left to bottom right, in a series of so-called horizontal lines and then each scan is repeated regularly to produce a sequence of pictures. The resolution or sharpness of the picture is determined by the number of picture elements or pixels allocated to the scan. The shape of the picture, its aspect ratio, determines the relationship between the number of horizontal and vertical pixels. In most digital video systems (especially broadcast) these numbers are standardised.

It is typical of television pictures that their representation takes one of two forms. Either the individual picture scans are completed using only one pass of the image, or they are done in two parts, where half the scan is done in a first pass, where only the odd numbered horizontal lines are taken, and the second half is done a second pass, where the remaining even numbered lines are taken. The former scan is called Progressive or Sequential scan, and the latter is called an Interlaced scan.

The first pass of the interlaced scan produces the so-called Top Field and the second pass the Bottom Field. The two fields together cover the same number of pixels as the complete Progressive scan and the complete picture is called a Frame or Picture. The various picture formats used in the industry are denoted by a convention that gives the number of horizontal lines forming the picture, followed by the letter, I or P, to define whether an Interlaced or Progressive format is used, for example 1080i = 1080 horizontal lines in Interlaced scan mode, whilst 720p = 720 horizontal lines in Progressive scan mode, etc.

It is clear that any movement in the picture during the Interlace scan will result in a degree of dislocation between the pixels of each Field, and that the degree of dislocation will be more severe the greater the speed of motion. This dislocation can cause a significant loss of efficiency in the compression of moving pictures and so it is better to code rapidly moving picture sequences Field by Field. All currently used video compression methods recognise this issue and allow both Field and Frame modes to be chosen using a Picture Adaptive Field/Frame (PAFF) method as the picture behaviour demands.

The ITU-T H.264 (MPEG 4 part 10) standard is used widely in the most recent commercial video compression products, and includes among its features the use of GOPs and a Field/Frame mode. In particular the coding of both P and B pictures in the GOP uses Inter-Field or Frame predictive methods. In order to extract the best performance from the method, it divides each complete picture, either a Frame or a Field, into a large number of contiguous, rectilinear blocks of pixels. The most significant of these blocks is a square group of pixels called a macroblock (MB) that is always 16 x 16 luminance pixels is size. Pixels are also known as pels. All the major analytical processing elements are performed on the luminance signal with the results being applied to both Luminance and Chrominance. The predictive coding process operates primarily at MB level and the coding of a given MB in a given picture is performed using a prediction from a block or blocks within another picture or pictures in the GOP 100 used as references, and which have already been coded.

However, the H.264 Inter prediction method allows not only whole MBs to be predicted from a number of reference pictures, but it also allows various sub-divisions or Partitions of MBs to be predicted (some of which are known as Sub-Macroblocks-SMB - rather than Partitions).

This added sophistication compared to MPEG-2, for example, contributes to the superior performance of the H.264 compression standard. In the particular case of encoding a B Field/Frame the reference pictures may be from previous pictures in display order - so called reference list0 pictures - or from later pictures in display order - reference list1.

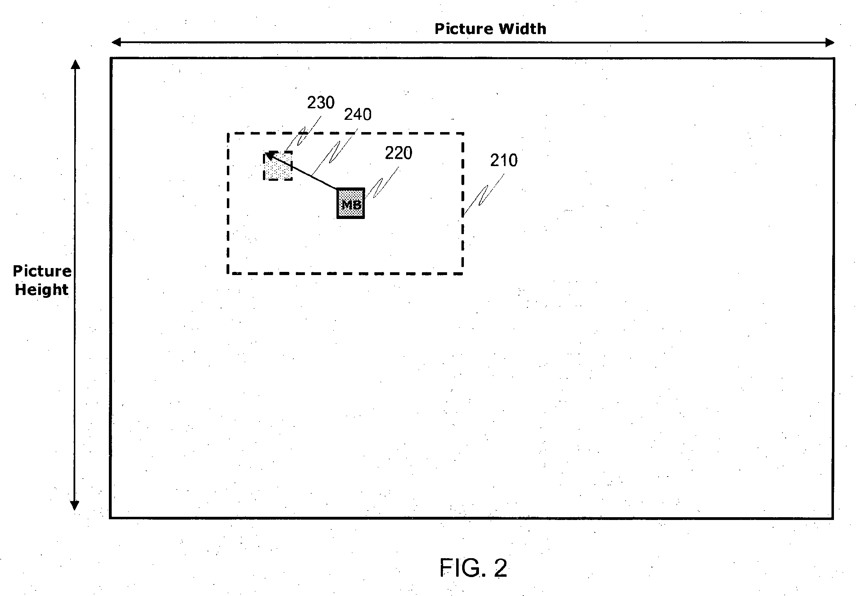

Where significant amounts of motion occur, good prediction performance can be obtained by compensating for that motion by seeking to find blocks of pixels in selected reference pictures that match a given block in the picture currently being coded (i.e. the picture of interest). The amount of movement for each MB between successive pictures is detected and measured using a searching process called Motion Estimation (ME) and is expressed as a Motion Vector (MV). The result is illustrated in Fig. 2, which shows an example rectangular search area 210 for a given Source macroblock 220 with a best match position 230 and resultant Motion Vector 240.

The search area 210 is symmetrically arranged around the centre of the MB 220. The MV 240, that is the position of the best match for the MB, is expressed as the number of pixels vertically and horizontally from the reference position to the MB. Whilst the MV properties are defined in current video compression standards, the ME process is not and video compression product manufacturers are free to devise and implement their own methods. The MV is used in the encoding process, but is also conveyed to the decoder to enable that decoder to identify the correct reference blocks to be used in reconstructing each MB in the picture. Motion search methods are commonly used to identify a number of best match blocks, or candidates, from a single reference picture or from several of them. These candidates can be combined in list0/list1 pairs to produce Bi-predicted candidates. Furthermore 16x16 pixel MBs and 8x8 pixel partitions may also be predicted using the so-called Direct Mode.

As a result of all these options there may be several Inter prediction candidates for each MB and each Partition that must be compared to find the best, most efficient coding. This flexibility in the number of choices available improves the performance of the method, but at the expense of the additional processing resources required to evaluate each of the coding options. Each assessment must be completed within the duration period of the MB. The computing power and speed to do this are challenging, and so an efficient practical method of achieving the result is extremely desirable. For example, in a high definition encoder working on a 1920 x 1080 pixel picture format (1080p), where a typical Frame period is 33.3 milliseconds (at the worst case scenario of 60 Hz display rate) there are 120 x 68 = 8160 MBs, each MB therefore having to be completely coded in less than 4 microseconds.

There are many different possible motion estimation search methods, and there are many different methods in use within H.264 video encoders. They have different requirements in terms of data alignment, as they search different numbers of positions with different separations between the positions. However, in general, the more positions searched, the better the performance of the motion search method.

A high performance 1080i H.264 encoder may use for example, 4 reference fields and 16x8, 8x16 and 8x8 partitions with a search range of +/-120 by +/-56 pixels (i.e. and area of 240 by 112 pixels = 26880). For an encoder of this type, the worst-case macroblock processing time per reference is 1 microsecond.

For a real-time broadcast video encoder of this type, generally only hardware (Field Programmable Gate Array or Application Specific Integrated Circuit) designs are capable of the required processing. A typical clock rate for this kind design is 200MHz. This gives 200 clock cycles in which to search as many positions as possible out of the 26880 within the search range. Searching all these positions is not practical so a multi-stage algorithm is often used to try to reduce the number of positions without reducing the performance of the encoder. Examples of such algorithms are described in European Patent application EP 2392139A1.

Generally the main stage of a multi-stage ME search method will involve a sparse search of positions covering the whole search range. The number of positions is generally as many as the computational restrictions will allow.

Other stages will be exhaustive but cover only a small area around a predictor or the current best match position. These stages attempt to find a better match by searching as many positions as the computational restrictions will allow in an area around a previously known good match.

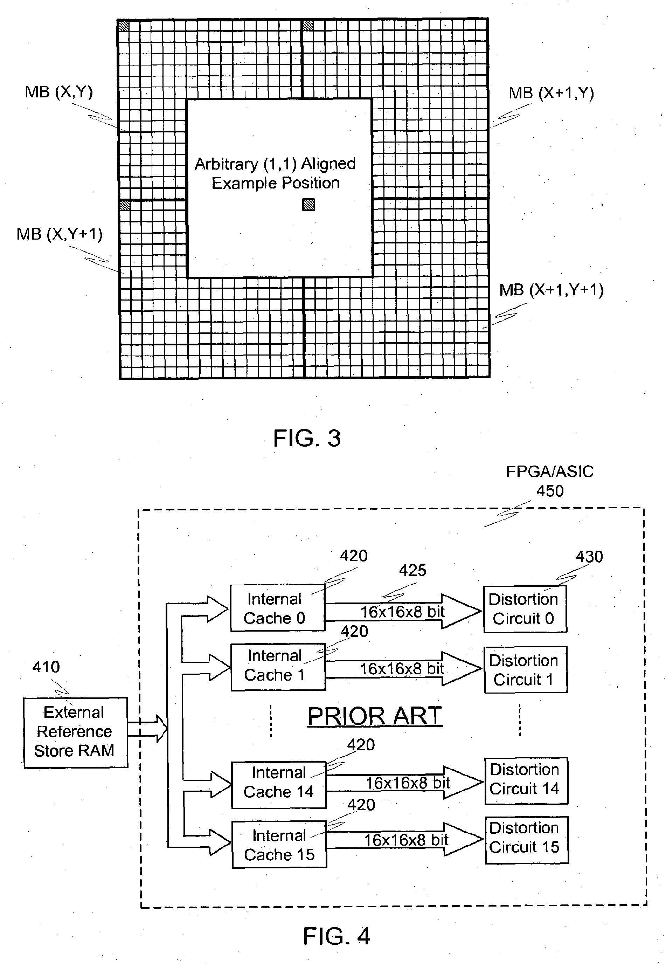

Even with the reduction in search positions provided by a multi-stage ME search method, it is necessary to search multiple positions (e.g. 16) per clock cycle to get sufficiently high performance. This requires 16x16 pixels of data potentially aligned down to 1-pixel for each of the 16 positions to be presented to the distortion calculation circuit per clock cycle. Fig. 3 shows an arbitrary example of a search position. Bandwidth of this order is not possible from an external RAM reference store, hence the data must be cached in on-chip cache memory.

The conventional solution is for the reference data for each of the positions to be read from a separate internal reference store cache.

Fig. 4 shows an example schematic diagram of a prior art digital video encoder cache that can test 16 positions. The digital video encoder is typically formed out of a FPGA or ASIC 450 containing an Internal Cache 420 for each of the 16 positions (cache 0 -15), which feeds data into a respective distortion circuit 430 (Distortion circuit 0 - 15) via a16pelx16pelx8bit bus 425. Each reference store is filled with the same data, i.e. the current search area. However the read bandwidth from the RAMs used for the internal reference store caches 420 is then very high.

The bandwidth required is 16x16 pixels per position per clock cycle. For the 16 positions example, the bandwidth required is therefore 16 x 16 x 16 = 4096 pixels per clock cycle.

To allow arbitrary 1-pixel alignment of the reference data (as shown in Fig. 3), 8-bit (= 1 pixel) wide RAM interfaces 425 have to be used.

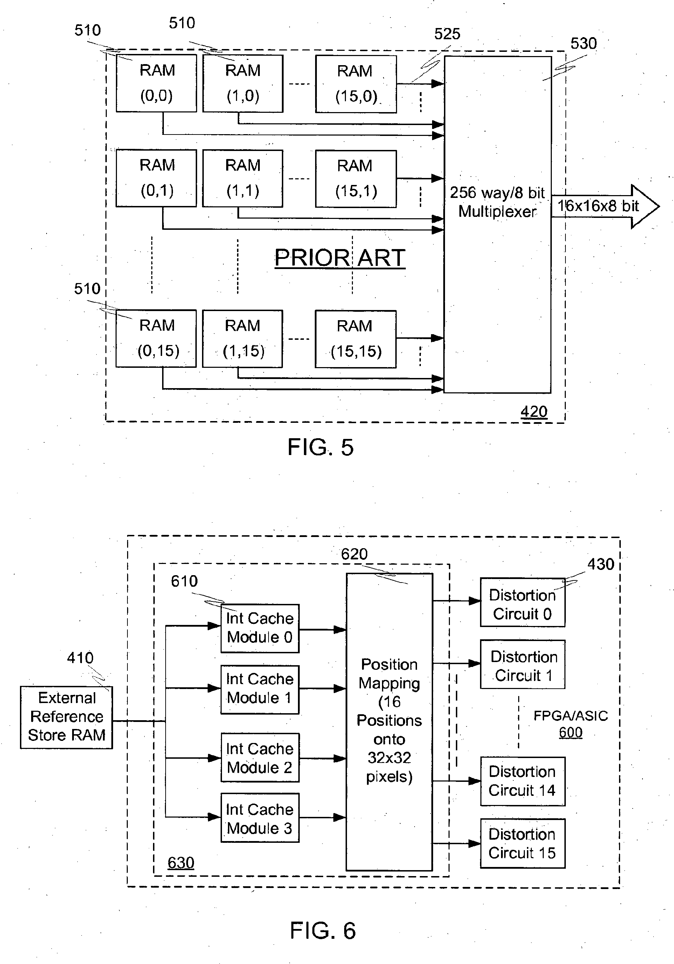

Fig. 5 shows the construction of one of the internal caches 420, which comprises 256 separate RAM blocks 510, all connected to a 256 way 8-bit multiplexer 530 via 8 bit interfaces 525, for selecting the required output data. Each RAM block 510 holds the (x,y) pixel data from all the reference macroblocks (in all reference pictures used during the ME search method) in the search area. For example RAM(0,0) in Fig. 5 holds the data for all the grey pixels in Fig. 3.

This solution requires 4096 RAM blocks, which is far more than is available in current FPGA devices or desirable to design into an ASIC device.

This solution also requires a large amount of multiplexing. For each position searched, each of the 256 RAM blocks 510 shown in Fig. 5 holds a particular (x, y) pixel from each reference macroblock (in all reference pictures). To achieve an arbitrary 1-pixel aligned position, the output of all RAM blocks 510 must be 256-way multiplexed such that the data from any of the 256 RAM blocks 510 can be switched to any pixel of the arbitrary aligned position. Therefore each position searched uses a 256 multiplexer 530. As there are 16 positions (in this example), then sixteen 256 multiplexers 530 are required, and this level of multiplexing requires 5 a large amount of logic resources within the FPGA or ASIC device.

Yu-Wen Huang et al: "A 1.3TOPS H.264/AVC single-chip encoder for HDTV applications" IEEE Interntional Solid-State Circuits Conference, ISSCC 2005. Digest of Technical Papers., 6 February 2005, pages 128-129, 588, XP031173679 PISCATAWAY, NJ, USA ISBN: 978-0-7803-8904-5 describes a digital video compression system including caching for storing motion estimation reference data.

Accordingly, the following invention describes an improved cache design for motion search methods in digital video encoders.

### Summary

Embodiments of the present invention provide an internal cache memory for motion estimation search in a hardware digital video encoder wherein the motion estimation search has a first predetermined number of search positions to search per cycle of computation, comprising a plurality memory blocks, each memory block adapted to store pixel data from a reference search area and a memory controller adapted to store pixel data into the plurality of memory blocks as 16 pixel wide lines of pixels aligned to macroblock boundaries per clock cycle of the encoder, and to read pixel data from the plurality of memory blocks as 16 pixel by 16 pixel blocks of pixels for each of the first predetermined number of search positions per clock cycle of the encoder. The memory controller is adapted to provide search position data from the plurality of memory blocks in 1 pixel or 4 pixel spaced combinations.

Optionally, the plurality of memory blocks comprises memory blocks having a predetermined depth, and the plurality of memory blocks are arranged as four quadrant internal cache modules. Optionally, the each quadrant internal cache module comprises sixteen memory blocks in a four by four memory grid, wherein each row of the memory grid stores the 16 pixel wide line of pixels, and wherein the memory grid references four rows of the reference search area pixel data per unit of depth up to the predetermined depth.

Optionally, the each quadrant internal cache module stores a whole copy of the reference search area pixel data.

Optionally, for each quadrant internal memory cache module, the memory controller comprises a sixteen way multiplexer, adapted to output a one of the plurality of memory blocks.

Optionally, the memory controller further comprises a mapping circuit adapted to map any of the first predetermined number of search positions onto a search window.

Optionally, each of the plurality of memory blocks is connected to other logic blocks using 32 bit buses.
Optionally, the motion estimation search is according to a multi stage motion estimation search method.

Optionally, the memory blocks are Dual Port RAMs

Optionally, the reference search area is 256 pixels by 128 pixels, and the first predetermined number of positions is 16.

Optionally, the search window is 32 pixels by 32 pixels.

Embodiments of the present invention also provide a method of transacting data with an internal cache memory for motion estimation search, wherein the motion estimation search has a first predetermined number of search positions to search per cycle of computation. The method comprises storing pixel data into a plurality of memory blocks as 16 pixel wide lines of pixels aligned to macroblock boundaries per clock cycle of the encoder, each memory block adapted to store pixel data from a reference search area. Reading pixel data from the plurality of memory blocks as 16 pixel by 16 pixel blocks of pixels for each of the first predetermined number of search positions per clock cycle of the encoder Wherein the search positions are 1 pixel aligned or 4 pixel aligned.

Embodiments of the present invention also prove a motion estimator having the afore and below described internal cache memory, and a hardware video encoder having the same.

The proposed internal cache memory for a hardware motion estimator, or complete digital video encoder, according to embodiments of the present invention allows a multi-stage Motion Estimation search method with sparse and exhaustive stages to be implemented efficiently within an FPGA or ASIC device. It does this by greatly reducing the number of RAM blocks used to achieve the data bandwidth required from internal cache to the motion estimation calculation circuits (for example, distortion calculation units), the data being reference data covering multiple search positions per clock cycle.

The invention also greatly reduces the logic resources required for alignment multiplexing of reference data for multiple search positions per clock cycle. It does this by designing the internal cache structure to synergistically exploit characteristics of the sparse and exhaustive searches in ME search methods, in particular, the use of 1-pixel spaced exhaustive and 4-pixel spaced sparse searches. The pixel data is also written to the internal cache from external memory in an appropriate order and location, in particular, as a moving window across the search area. This approach greatly reduces the memory block numbers required, whilst still enabling the data required for the ME search calculations to be available.

In effect, the described internal cache design for Motion Estimation search in a hardware digital video encoder utilises a synergy between the available bus sizes and typical search position spacings for real life digital video (1 or 4 pixel spaced), and an appropriate order of reading and writing the pixel data to the internal cache, so that the search position data can be selected and passed to the distortion circuits using addressing, with a much reduced requirement for output multiplexing. A further advantage is that less overall memory is required. This greatly reduces the cost and complexity of the internal cache design, at the same time as improving performance.

### Brief description of the drawings

An efficient cache design for Motion Estimation in a digital video hardware encoder will now be described, by way of example only, with reference to the accompanying drawings in which:
Fig. 1 shows an exemplary Group of Pictures structure showing prediction relationships;
Fig. 2 shows an exemplary search area, relative to a complete picture, for a given source macroblock, with a best match position and resultant Motion Vector;
Fig. 3 shows an arbitrary example of a search position in a motion estimation search method;
Fig. 4 shows a high level schematic diagram of an example prior art digital video encoder internal cache that can test 16 positions;
Fig. 5 shows the more specific construction of one of the internal cache modules according to the prior art;
Fig. 6 shows a high level schematic diagram of a 16 position internal cache for a hardware digital video encoder according to an embodiment of the present invention;
Fig. 7 shows a more specific schematic diagram of one of the four internal cache modules of Fig. 6, according to an embodiment of the present invention;
Fig. 8 shows an internal schematic diagram of one of the 4x4 RAM blocks of Fig. 7 according to an embodiment of the present invention;
Fig. 9 shows a reference search range for MB (0,0) overlaid on a whole reference picture and how it is stored in the internal cache according to an embodiment of the present invention;
Fig. 10 shows a reference search range for MB (7,0) overlaid on a whole reference picture and how it is stored in the internal cache according to an embodiment of the present invention;
Fig. 11 shows a reference search range for MB (119,0, in 1080i/1080p) overlaid on a whole reference picture and how it is stored in the internal cache according to an embodiment of the present invention;
Fig. 12 shows a reference search range for MB (0,1) overlaid on a whole reference picture and how it is stored in the internal cache according to an embodiment of the present invention;
Fig. 13 shows an example of 16 sparse search positions within a 32x32 pixel search area according to an embodiment of the present invention;
Fig. 14 shows an example of 16 exhaustive search positions within a 32x32 pixel search area according to an embodiment of the present invention;
Fig. 15 shows an arbitrary (4,4) search position within a 32x32 pixel search area according to an embodiment of the present invention.

### Detailed description

An embodiment of the invention will now be described with reference to the accompanying drawings in which the same or similar parts or steps have been given the same or similar reference numerals.

Embodiments of the invention provide an internal cache design for use in Motion Estimation (ME) searches in a hardware digital video encoder that can store the reference search area copied from an external RAM store as 16-pixel lines aligned to macroblocks. Furthermore, the cache is structured such that it is able to retrieve 16x16 pixels of data for each of the sixteen 1-pixel (exhaustive) or 4-pixel (sparse) aligned search positions required for a multi-stage ME search method, as described herein.

The design uses minimal multiplexing logic and RAM block resources. In particular, 32-bit/4-pixel RAM interfaces are used to achieve a greater bandwidth per RAM block. Usefully, this also still allows simple 4-pixel alignment in both dimensions by RAM addressing and only one stage of 16-way multiplexing during sparse searches. This is a large reduction in the logic resources required for alignment multiplexing compared to the known solution described above.

Four pixel sparse searches are often used in modern ME search methods, especially for encoding HDTV (1080i/1080p) video.

The proposed internal cache design takes advantage of the fact that, for a multi-stage ME search method, the multiple positions searched in one clock cycle may overlap to reduce the read bandwidth required to 1024 pixels per clock cycle. This reduces the number of RAM blocks required by a factor of 16, to 256 RAM blocks, compared to the previous 4096 RAM blocks used by the above described existing solution. The RAM blocks required by the invention are twice the depth of those required by the existing solution, but the reduction in out right RAM capacity is still a factor of 8. This brings the internal memory requirements down to levels realistically available in current FPGA devices, or to levels desirable to design into an ASIC device from cost perspective.

### Construction of the internal cache

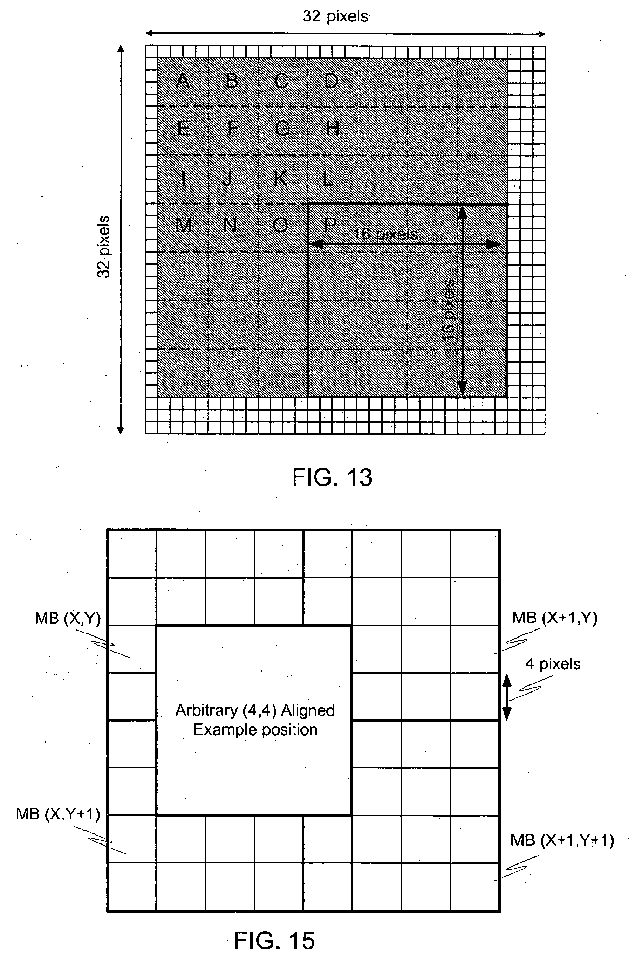

Fig. 6 shows a high level schematic diagram of a sixteen position internal cache 630 for a hardware digital video encoder that uses four reference pictures, according to an embodiment of the present invention. The internal cache 630 is integrated onto the same die as the hardware motion estimator, and comprises a set of four internal cache modules 610, one for each quadrant in the search window, and a position mapping circuit 620, which maps the sixteen (1 pixel or 4 pixel spaced) search positions onto the 32 by 32 pixel window (see further explanation of these search positions below, with reference to Figs. 13 and 14). The internal cache 630 provides the data required by the Distortion circuits 430 used in the ME search method. The data is originally loaded into the internal cache modules 610 from an external memory store 410.

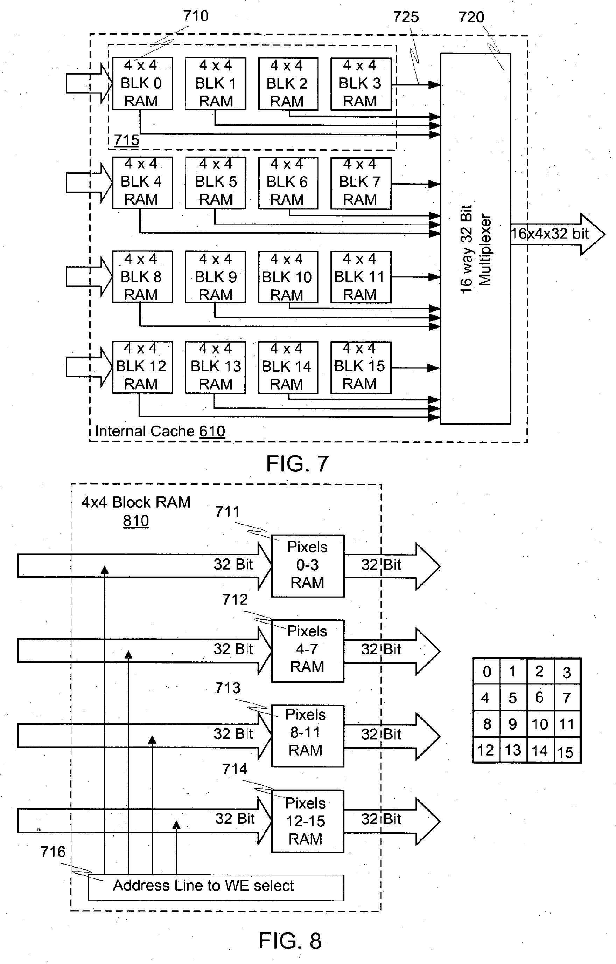

Fig. 7 shows a more detailed schematic diagram of one of the four quadrant internal cache modules 610 of Fig. 6, according to an embodiment of the present invention. The quadrant internal cache module 610 comprises an array of sixteen 4 pixel x 4 pixel RAM blocks 710.

Each 4 pixel x 4 pixel RAM memory block 710 is constructed from 512 byte (i.e. pixel) deep x 32-bit Dual Ported Random Access Memory blocks (DPRAMs, and contains four of these DPRAMs as shown in Fig. 8.

Fig. 8 shows an internal schematic diagram of one of the 4x4 RAM blocks of Fig. 7 according to an embodiment of the present invention. The 4x4 RAM block 710 comprises four individual DPRAM blocks (711 to 714) for storing the pixel data within a 4x4 block (as shown to right of Fig. 8) in consecutive order (0-3, 4-7, etc), and a memory location addressable Write Enable (WE) mechanism 716 to control which data is written at particular points in time, as described in more detail below. Other read/write control systems may be used instead. Note, the 16 pixel lines are written to the 4x4 blocks 710 (e.g. BLK0 - BLK3 in Fig. 7) by writing to each of the 0-3 DPRAM blocks 711 in sequence first, then each of the 4-7 DPRAM blocks 712 in sequence, then each of the 8-11 DPRAM blocks 713 in sequence and then each of the 12-15 DPRAM blocks 714 in sequence. Writing then returns to the 0-3 DPRAM blocks 711 again. In this way, the 16 pixel lines are being written such that they can be addressed either in 4 pixel spacings or 1 pixel spacings.

Since there are sixteen 4 pixel x 4 pixel memory blocks within a single quadrant internal cache 610, as shown in Fig. 7, and there are four quadrant internal caches used in the whole design, as shown in Fig. 6, each of these quadrant internal caches 610 therefore has 16x4x512x4 (= 131072) pixels of storage. The depth of the memory blocks is how many whole memory locations it has at the stated bit size. Thus, the depth of the memory is 512 words (where a word is 32 bits = 4 bytes = 4 pixels). This is equal to the search area (256 by 128 pixels) for four reference pictures (i.e. 4x256x128 = 131072). So the reference data is duplicated four times in the four quadrant internal caches. This duplication is necessary so that a 32x32pixel area can be read concurrently (in four quadrants, one per internal cache) on each clock cycle.

### Writing to the Cache

For each reference picture, data is read from external RAM in macroblock aligned 16-pixel lines and stored in the internal cache 630. A 16-pixel line is stored in a row of four 715 of the 4 pixel x 4 pixel memory RAM blocks 710 as shown in Fig. 7. Internally within each of the 4 pixel x 4 pixel memory RAM blocks 710, the write will only be to one of the 512x32-bit DPRAMs. When line 0 of a macroblock is written, then the write enable select block 716 will assert the write enable (WE) for the pixels 0-3 DPRAM 711. When line 1 of a macroblock is written, then the WE select block 716 will assert the WE for the pixels 4-7 DPRAM 712. When line 2 of a macroblock is written, then the WE select block 716 will assert the WE for the pixels 8-11 DPRAM 713. When line 3 of a macroblock is written, then the WE select block 716 will assert the WE for the pixels 12-15 DPRAM 714. When line four of a macroblock is written, then the WE select block 716 will start back at the pixels 0-3 DPRAM 711 at the next memory depth level, i.e. when line 4 of a macroblock is written then the write enable select block 716 will assert the WE for the pixels 0-3 DRPAM 711, in the next memory location down in the 512 depth of the DPRAM used. The process continues in a round robin fashion until the requisite portion of the four reference pictures are loaded into the internal cache. Put another way, the line address modulus 4 is used to select the WE.

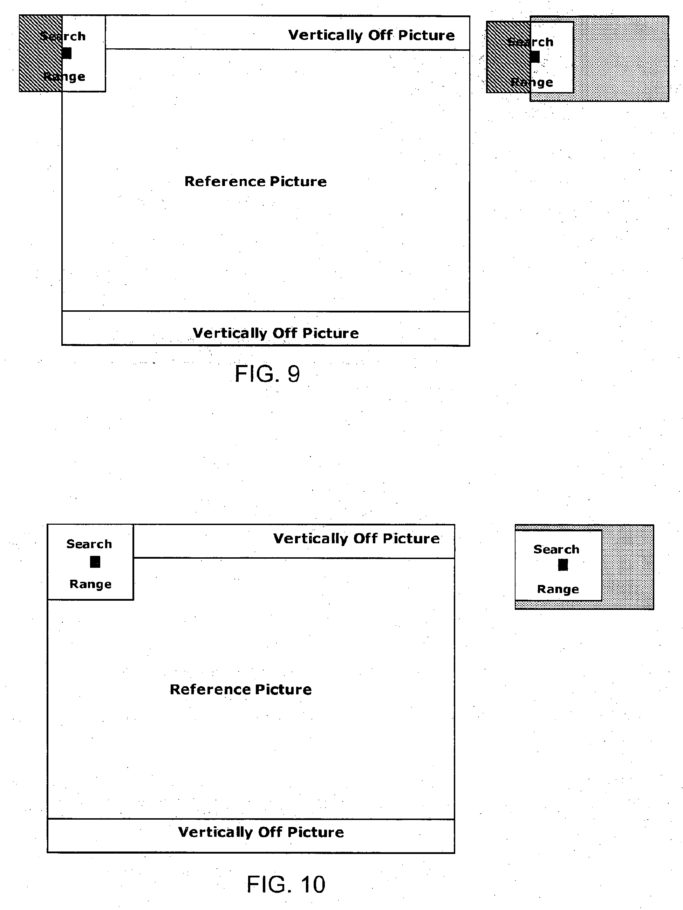

The complete search area for the current macroblock in each reference picture is always held in the internal cache. The diagrams in Figs. 9 - 12 show the operation of the internal cache for 1 reference picture. The operation is identical for all reference pictures. In all the diagrams the black square shows the position of the current MB in the reference field. The striped area shows data that is not currently valid and the cross hatched area shows pixel data that may be pre-fetched for use in the distortion calculations for the macroblock in the next row. The grey area shows the data for the search range within the internal cache.

The cache is initialized with 128x128 pixels for each reference picture before the first macroblock search begins (as shown in Fig. 9). The initialization process only half fills the internal cache at this point in time, as the macroblock is on the left edge, so there is no valid data to the left of the current macroblock. Thereafter a 16x128 pixel macroblock aligned column of data per reference picture is added to cache. The cached data therefore operates as a moving window shifting 16 pixels/1 macroblock to the right for every new macroblock to be searched (as shown in Fig. 10 for the 8th macroblock in a row).

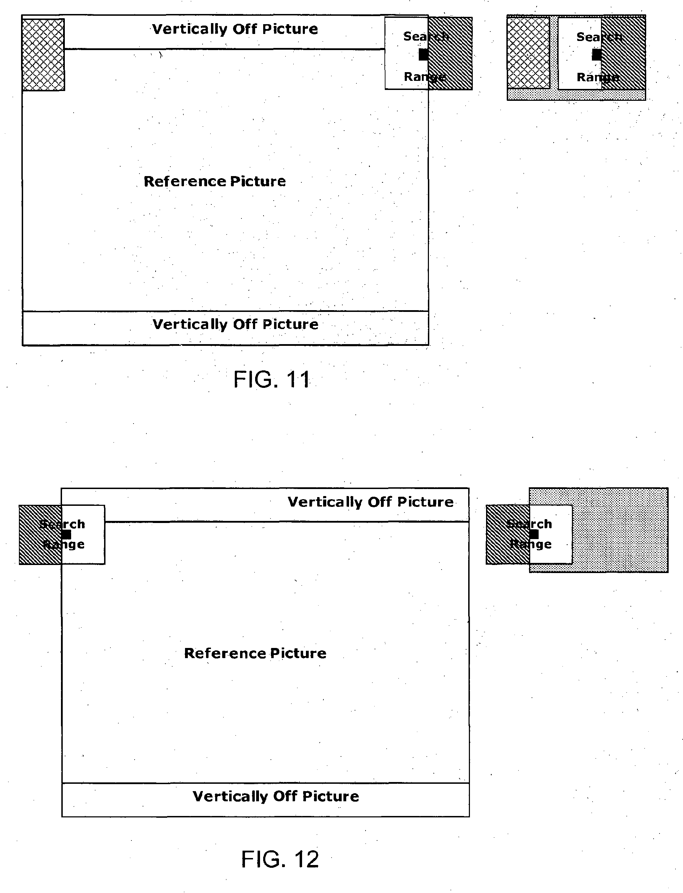

From seven macroblocks before the end of the row, i.e. once some of the search range has gone horizontally off picture to the right (as shown in Fig. 11 for the last macroblock in a row), new data is not required for the current row so the read bandwidth from external RAM is utilized for reading data for the next row. The crosshatched area shows this data for the next row. This ensures that the cache will be pre-initialized once it is time to search the first macroblock of the next row (as shown in Fig. 12) avoiding any break in the processing.

### Reading from the Cache

The proposed internal cache design allows 16x16 pixels (i.e. a macroblock) of data to be read for each of the sixteen search positions required per clock cycle by the multi-stage ME search method. In particular, the internal cache design takes advantage of the way a multi-stage method, as described in section 1 works (i.e. allowing 1 pixel aligned exhaustive searches, as well as 4-pixel sparse searches).

Generally the main stage of a multi-stage ME search method will involve a sparse search of positions covering the whole search range. The sparse search stage attempts to find large motion vectors by searching positions in a pattern. The pattern used or its alignment is generally not important, assuming there is a reasonably even distribution of positions over the search range.

Other stages will be exhaustive but cover only a small area around a predictor or the current best match position. Again the exact alignment of the area can be considered not so important as the areas searched are large enough to cover pixels in all directions whatever the alignment.

The internal cache design also takes advantage of the fact that for a multi-stage ME search method, the multiple positions searched in one clock cycle may be arranged to overlap. The order in which positions are searched is generally not important. Hence positions which overlap can be searched in the same clock cycle.

So for the main (sparse) search stage, a multi-stage ME search method can be arranged such that the 16 positions will all be located within a 32x32 pixel area (as shown in Fig. 13) and will all be (4,4) pixel aligned. For the other (exhaustive) search stages, the ME search method can also be arranged such that the 16 positions will all be located within the 32x32 pixel area with position A (4,4) pixel aligned and the other positions aligned at 1 pel spacing (as shown in Fig. 14).

As discussed above, the design uses minimal logic resources and RAM blocks by using the widest FPGA RAM block interface size (32-bit), hence the maximum bandwidth is achieved per block, keeping the number of RAM blocks required to a minimum. Utilising the overlapping explained above reduces the read bandwidth required to 32x32 = 1024 pixels per clock cycle. This provides all the data required to cover all positions in all stages. Using the 4 pixel wide RAM interfaces the number of RAMs required is reduced by a factor of 16 from the existing solution (of 4096 blocks), to 256 blocks. The depth of each block is doubled in the process.

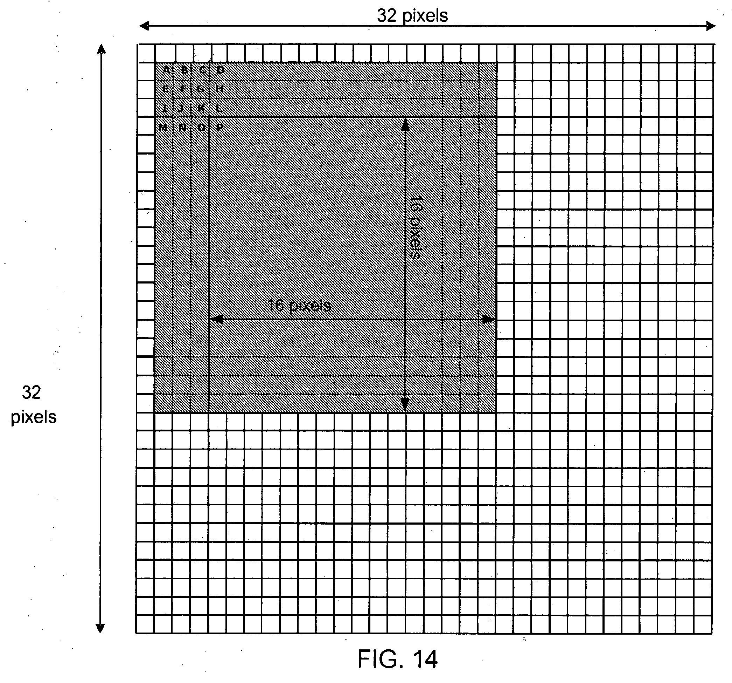

The internal cache design reads data from the 4pixel x 4pixel RAMs 710 as 4pixel x 4pixel blocks. This allows 4-pixel alignment in both dimensions (as shown in Fig. 15) to be achieved by RAM addressing and one stage of 16-way multiplexing. This greatly reduces the resource required for multiplexing compared to existing solutions. The sixteen reference caches used by the existing solution (as shown in Fig. 4) each use a 256-way multiplexers as shown in Fig. 5. These are replaced by four quadrant internal caches (as shown in Fig. 6), each using a 16-way multiplexer as shown in Fig. 7, with each quadrant internal cache providing a 16x16 pixel quadrant of the 32x32 pixel area required. The data output of the 16 way/32 bit multiplexer is 16x4x32bit, which equates to 16 x 16 pixels of a test position.

For the all stages of the multi-stage ME search method, no extra alignment multiplexing is required after the 4-pixel alignment. The Position Mapping block, as shown in Fig. 6, maps the appropriate data from the 32x32 pixel area onto positions A to P as shown in more detail in Figs. 13 and 14, and dependant upon the search stage. This involves 2-way multiplexing that requires a further small amount of logic resources.

### Avoiding Read/Write Collisions

As all the RAMs used are dual port, the cache can be written to at the same time as it is being read from, as long as there is not a read and a write to the same address on the same clock cycle. The motion search method used with this invention (which is controlling the reads) searches the four reference pictures in pairs during a macroblock period. So the reads from a pair of reference pictures will only happen during half of the macroblock period. This means that, so long as the writes to that pair of reference pictures happen during the other half of the macroblock period, then collisions are not possible. The writes are actually performed one reference picture at a time in sequence i.e. 0,1,2,3. So writes to reference 0 then 1 will happen while the reference 2/3 pair is being searched and vice versa.

The quadrant internal cache module internal multiplexing, and the 16 way mapping circuit may be considered a form of memory controller.

One exemplary hardware embodiment is that of a Field Programmable Gate Array (FPGA) designed and programmed as a Motion Estimator having the afore-described internal cache structure, the FPGA being located on a daughterboard of a rack mounted video encoder, for use in, for example, a television studio or location video uplink van supporting an in-the-field news team.

Another exemplary hardware embodiment of the present invention is that of a video encoder comprising an Application Specific Integrated Circuit (ASIC) having the described internal cache structure.

It will be apparent to the skilled person that parameters of the design of the internal cache for a hardware digital video encoder described herein (for example, the type and number of RAM blocks used) may be altered according to the requirements of the particular Motion Estimation method used. For example, how many reference pictures are used in the Motion Estimation search method, or the like.

## Claims

1. An internal cache memory for a multi-stage motion estimation search in a hardware digital video encoder wherein the motion estimation search has a first predetermined number of search positions within a 32x32 pixel area to search per clock cycle of the encoder, comprising:
a plurality of memory blocks, each memory block adapted to store pixel data from a reference search area wherein the plurality of memory blocks comprise memory blocks having a predetermined depth, and the plurality of memory blocks are arranged as four quadrant internal cache modules, wherein each quadrant internal cache module comprises 16 memory blocks in a 4x4 memory grid, wherein each row of the memory grid stores a 16 pixel wide line of pixels, and wherein the memory grid references four rows of the reference search area pixel data per unit of depth up to the predetermined depth; and
a memory controller adapted to:
store pixel data into the plurality of memory blocks as 16 pixel wide lines of pixels aligned to macroblock boundaries per clock cycle of the encoder; and
read pixel data from the plurality of memory blocks as 16 pixel by 16 pixel blocks of pixels for each of the first predetermined number of search positions per clock cycle of the encoder, each quadrant internal cache providing a 16x16 pixel quadrant of the 32x32 pixel area required;
wherein the memory controller is adapted to provide search position data from the plurality of memory blocks in 1 pixel or 4 pixel spaced search positions.

2. The internal cache memory of claim 1, wherein each quadrant internal cache module stores a whole copy of the reference search area pixel data.

3. The internal cache memory of claim 1 or 2, wherein, for each quadrant internal memory cache module, the memory controller comprises:
a sixteen way multiplexer, adapted to output a one of the plurality of memory blocks.

4. The internal cache memory of any of claims 1 to 3, wherein the memory controller further comprises a mapping circuit adapted to map any of the first predetermined number of search positions onto a search window.

5. The internal cache memory of any preceding claim, wherein each of the plurality of memory blocks is connected to other logic blocks using 32 bit buses.

6. The internal cache memory of any preceding claim wherein the motion estimation search is according to a multi stage motion estimation search method.

7. The internal cache memory of any preceding claim wherein the memory blocks are Dual Port RAMs

8. The internal cache memory of any preceding claim, wherein the reference search area is 256 pixels by 128 pixels, and the first predetermined number of positions is 16.

9. A motion search method using the internal cache memory of any preceding claim.

## Patentansprüche

1. Interner Cachespeicher für eine mehrstufige Bewegungsschätzungssuche in einem digitalen Hardware-Videoencoder, wobei die Bewegungsschätzungssuche eine erste vorbestimmte Anzahl von Suchpositionen innerhalb eines 32 x 32-Pixelbereichs zum Suchen pro Taktzyklus des Encoders aufweist, umfassend:
eine Mehrzahl von Speicherblöcken, wobei jeder Speicherblock zum Speichern von Pixeldaten aus einem Referenzsuchbereich ausgelegt ist, wobei die Mehrzahl von Speicherblöcken Speicherblöcke mit einer vorbestimmten Tiefe umfasst, und die Mehrzahl von Speicherblöcken als interne Cachemodule in vier Quadranten angeordnet ist, wobei das interne Cachemodul jedes Quadranten 16 Speicherblöcke in einem 4 x 4-Speichergitter umfasst, wobei jede Reihe des Speichergitters eine 16 Pixel breite Zeile von Pixeln speichert, und wobei das Speichergitter vier Reihen der Referenzsuchbereichs-Pixeldaten pro Einheit von Tiefe bis zur vorbestimmten Tiefe referenziert; und
eine Speichersteuerung, die ausgelegt ist zum:
Speichern von Pixeldaten in der Mehrzahl von Speicherblöcken als 16 Pixel breite Zeilen von Pixeln, die zu Makroblockgrenzen ausgerichtet sind, pro Taktzyklus des Encoders; und
Auslesen von Pixeldaten aus der Mehrzahl von Speicherblöcken als 16-Pixel-mal-16-Pixel-Blöcke von Pixeln für jede der ersten vorbestimmten Anzahl von Suchpositionen pro Taktzyklus des Encoders, wobei der interne Cache jedes Quadranten einen 16 x 16-Pixel-Quadranten des erforderlichen 32 x 32-Pixelbereichs bereitstellt;
wobei die Speichersteuerung so ausgelegt ist, dass sie Suchpositionsdaten aus der Mehrzahl von Speicherblöcken in 1 Pixel oder 4 Pixel beabstandeten Suchpositionen bereitstellt.

2. Interner Cachespeicher nach Anspruch 1, wobei das interne Cachemodul jedes Quadranten eine vollständige Kopie der Referenzsuchbereichs-Pixeldaten speichert.

3. Interner Cachespeicher nach Anspruch 1 oder 2, wobei die Speichersteuerung für das interne Cachemodul jedes Quadranten des Speichers umfasst:
einen Sechzehn-Wege-Multiplexer, der zum Ausgeben eines der Mehrzahl von Speicherblöcken ausgelegt ist.

4. Interner Cachespeicher nach einem der Ansprüche 1 bis 3, wobei die Speichersteuerung ferner eine Abbildungsschaltung umfasst, die so ausgelegt ist, dass sie jede der ersten vorbestimmten Anzahl von Suchpositionen auf ein Suchfenster abbildet.

5. Interner Cachespeicher nach einem der vorhergehenden Ansprüche, wobei jeder der Mehrzahl von Speicherblöcken unter Verwendung von 32-Bit-Bussen mit anderen Logikblöcken verbunden ist.

6. Interner Cachespeicher nach einem der vorhergehenden Ansprüche, wobei die Bewegungsschätzungssuche gemäß einem mehrstufigen Bewegungsschätzungssuchverfahren erfolgt.

7. Interner Cachespeicher nach einem der vorhergehenden Ansprüche, wobei die Speicherblöcke Dual-Port-RAMs sind.

8. Interner Cachespeicher nach einem der vorhergehenden Ansprüche, wobei der Referenzsuchbereich 256 Pixel mal 128 Pixel ist, und die erste vorbestimmte Anzahl von Positionen 16 ist.

9. Bewegungssuchverfahren, das den internen Cachespeicher nach einem der vorhergehenden Ansprüche verwendet.

## Revendications

1. Mémoire cache interne pour une recherche d'estimation de mouvement à étages multiples dans un codeur vidéo numérique matériel, dans laquelle la recherche d'estimation de mouvement comporte un premier nombre prédéterminé de positions de recherche à l'intérieur d'une zone de 32x32 pixels pour une recherche par cycle d'horloge du codeur, comprenant :
une pluralité de blocs de mémoire, chaque bloc de mémoire étant apte à mémoriser des données de pixels à partir d'une zone de recherche de référence, dans laquelle la pluralité de blocs de mémoire comprend des blocs de mémoire ayant une profondeur prédéterminée, et la pluralité de blocs de mémoire sont agencés sous la forme de quatre modules de mémoire cache interne en quadrant, dans laquelle chaque module de mémoire cache interne en quadrant comprend 16 blocs de mémoire dans une grille de mémoire de 4x4, dans laquelle chaque rangée de la grille de mémoire mémorise une ligne de pixels d'une largeur de 16 pixels, et dans laquelle la grille de mémoire fait référence à quatre rangées de données de pixels de zone de recherche de référence par unité de profondeur jusqu'à la profondeur prédéterminée ; et
un organe de commande de mémoire apte à effectuer :
la mémorisation de données de pixels dans la pluralité de blocs de mémoire sous la forme de lignes de pixels d'une largeur de 16 pixels alignées avec des frontières de macroblocs par cycle d'horloge du codeur ; et
la lecture de données de pixels à partir de la pluralité de blocs de mémoire en tant que blocs de pixels de 16 pixels par 16 pixels pour chacun du premier nombre prédéterminé de positions de recherche par cycle d'horloge du codeur, chaque mémoire cache interne en quadrant fournissant un quadrant de 16x16 pixels de la zone de 32x32 pixels requise ;
dans laquelle l'organe de commande de mémoire est apte à fournir des données de positions de recherche à partir de la pluralité de blocs de mémoire à des positions de recherche espacées de 1 pixel ou 4 pixels.

2. Mémoire cache interne selon la revendication 1, dans laquelle chaque module de mémoire cache interne en quadrant mémorise une copie complète des données de pixels de zone de recherche de référence.

3. Mémoire cache interne selon la revendication 1 ou 2, dans laquelle, pour chaque module de mémoire cache interne en quadrant, l'organe de commande de mémoire comprend :
un multiplexeur à seize voies apte à délivrer l'un de la pluralité de blocs de mémoire.

4. Mémoire cache interne selon l'une quelconque des revendications 1 à 3, dans laquelle l'organe de commande de mémoire comprend en outre un circuit de mise en concordance apte à mettre en concordance n'importe laquelle du premier nombre prédéterminé de positions de recherche avec une fenêtre de recherche.

5. Mémoire cache interne selon l'une quelconque des revendications précédentes, dans laquelle chacun de la pluralité de blocs de mémoire est relié à d'autres blocs logiques en utilisant des bus de 32 bits.

6. Mémoire cache interne selon l'une quelconque des revendications précédentes, dans laquelle la recherche d'estimation de mouvement s'effectue selon une méthode de recherche d'estimation de mouvement à étages multiples.

7. Mémoire cache interne selon l'une quelconque des revendications précédentes, dans laquelle les blocs de mémoire sont des RAM à deux ports.

8. Mémoire cache interne selon l'une quelconque des revendications précédentes, dans laquelle la zone de recherche de référence est de 256 pixels par 128 pixels, et le premier nombre prédéterminé de positions est 16.

9. Méthode de recherche de mouvement utilisant la mémoire cache interne selon l'une quelconque des revendications précédentes.
